# EUROPEAN PATENT APPLICATION

(11) **EP 1 793 294 A1**
(43) Date of publication of application: **06.06.2007**
(21) Application number: 05405680.9
(22) Date of filing: 01.12.2005
(51) Int. Cl.: G05B 19/418

(54) **Controller for industrial manufacturing apparatus**

(71) Applicant: ABB RESEARCH LTD., 8050 Zürich (CH)
(72) Inventor: Naedele, Martin, 8050 Zürich (CH); Sager, Patrick, 5400 Baden (CH)
(74) Representative: ABB Patent Attorneys

(57) **Abstract**

The inventive manufacturing control system comprises means (21, 22) for protecting communication between the manufacturing control processor unit (11, 12, 13) and an additional communication unit, such as another manufacturing control processor unit, a programming and/ or monitoring processor unit (41, 42).

The inventive protective means protect the manufacturing system and its components, e.g. programming applications for programming the automated manufacturing unit or monitoring applications for monitoring the automated manufacturing unit, against undirected attacks (e.g. worms) and directed attacks.

## Description

### Field of the Invention

The invention relates to the field of IT security for automation systems, specifically control systems for industrial robots and other automated manufacturing equipment.

### Background of the Invention

Industrial automation systems with different kinds of automated manufacturing units or robots used in palletizing and material handling, assembly operations, welding, spray painting and laboratory applications, dispensing operations, and water jet cutting are no longer isolated workstations. Several units within a manufacturing cell are linked amongst each other and to programming or monitoring processor units over an intra-manufacturing unit communication network or even over inter-manufacturing cell communication networks or general global communication networks like the global internet.
In the past, communication to and from robots was based on physically separated networks or at least proprietary protocols. This kind of communication caused hardly any security risks. However, with the need for more insight from the office floor into the events on the robots in the manufacturing cells on the shop floor, standard based TCP/IP communication over Ethernet has been introduced for communication from the manufacturing cells on the shop floor to the office floor and even for communication within the manufacturing cells between robots and manufacturing control processor units.
On one hand, standard communication facilitates interoperability on the other hand, new and high security risks are introduced to shop floor communication.

### Background Art

JP2004306200 from Yaskawa Electronic Corporation, discloses a robot control system comprising a management server, which acts more or less like a proxy server. At one end, it wires the communication line to the outside world and at the other end, it wires the communication line to several robot controllers. The management server performs address-translation between inside robot controllers and outside objects. This way it enables a reliable and simple controlling of the robots, and provides better security of communication data.

### Description of the Invention

It is an object of this invention to provide a manufacturing control system, comprising at least one automated manufacturing unit and a manufacturing control processor unit, which can be engineered and operated securely over networks.
The inventive manufacturing control system comprises means for protecting communication between the manufacturing control processor unit and at least one additional communication unit, such as another manufacturing control processor unit, a programming and/ or monitoring processor unit, or the automated manufacturing unit itself. The inventive protective means protect the manufacturing system and its components, e.g. programming applications for programming the automated manufacturing unit or monitoring applications for monitoring the automated manufacturing unit, against maloperation, undirected attacks (e.g. worms) and directed attacks.

### Brief Description of the Drawings

Further advantages, features and possibilities of using the invention are explained in the following description of a preferred embodiment of the invention which is to be read in conjunction with the attached drawings. In the drawings,

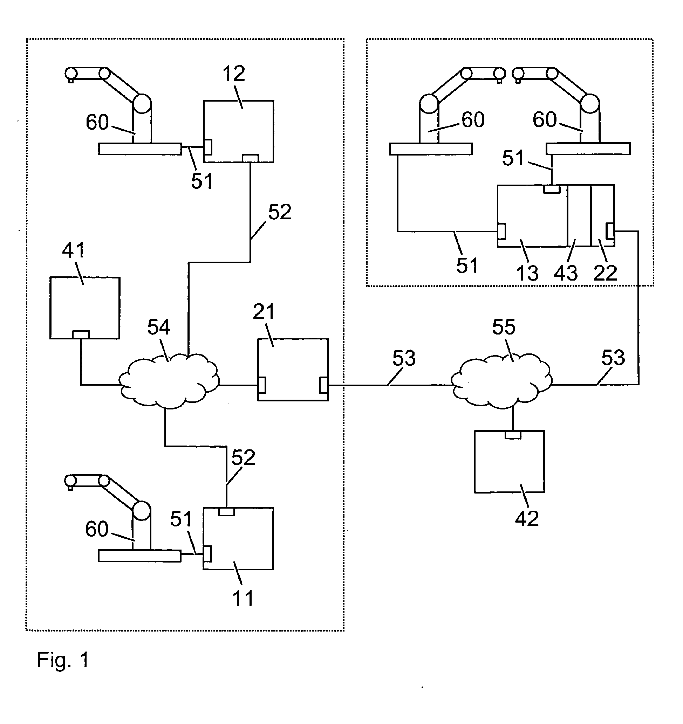

- Fig. 1: schematically shows an automated manufacturing environment with two manufacturing cells linked to and connected over a network and comprising an inventive manufacturing control system.

### Detailed Description of a Preferred Embodiment

Fig. 1 shows an automated manufacturing environment with two manufacturing cells. Each of the two manufacturing cells comprises one or several automated manufacturing units 60, e.g. robots. Each of the automated manufacturing units is linked to a manufacturing control processor unit 11, 12 or 13, whereas one control processor unit controls one or more than one manufacturing unit. These manufacturing control processor units are connected to each other, either over an intra-manufacturing cell network 54 as shown in the left manufacturing cell or over an inter-manufacturing cell network 55, e.g. an enterprise intranet or a global network such as the internet, as shown between the two manufacturing cells.

Each of the control processor units typically comprises one or more microprocessors with storage and communication means, running one or more proprietary or COTS (commercial off the shelf) operating systems and having optional human machine interfaces for input or output from or to users. Communication means are symbolized in the drawing by the little boxes next to the outgoing communication links. They can be any wired (e.g. Ethernet) or wireless (e.g. WLAN, Bluetooth) input/output interface for communicating with a communication interface of another processor unit. Manufacturing communication link 51 between the control processor unit and the manufacturing unit can be conventionally wired or wireless for increased flexibility. Also the other communication links can be either wired or wireless, e.g. the intra-manufacturing communication link 52 in the manufacturing cell shown on the left side of Fig. 1.

Within or outside a manufacturing cell, there can be other processor units running production tracking applications for performance monitoring or programming applications for programming the automated manufacturing units or their control processor units. Such additional Programming/ Monitoring Processor Units can be separate processor units 41 or they can be directly integrated as a soft- or hardware module 43 in the manufacturing control processor unit 13. Such separate processor units 41 typically comprise their own communication means to collect data from the equipment and other data sources, storage means to store these data temporarily or long-term, output means to display selection of the data in various forms including tables, graphs and input means to define and control display selections and application configuration. In distributed systems, programming and/or monitoring processes can be distributed over multiple hosts according to the client/server or peer-to-peer or terminal-mainframe distribution models with, e.g. a remote server 42 being accessible over the communication network 55 and a thin client 42 or 43 being operated within the manufacturing cell or even on the manufacturing control processor unit itself.

Before data is downloaded and/ or installed from a Programming Processor Unit onto a manufacturing control processor unit and/ or is activated, an optional plausibility check with regard to safety and security implications of the data to be installed on the robot control is executed.

In order to protect communication within but also from and to one or more than one manufacturing cell there are several communication security options which will now be discussed in detail.

The inventive manufacturing control system comprises in a first embodiment at least one security processor unit 21 which is placed at the communication interface of the manufacturing cell to the outside network 55. The security processor unit interposes itself on a communication path between components that are part of the manufacturing cell and components that are not, with at least one communication interface on each side.The security processor unit 22 can also be integrated as one or more hard- or software modules in a manufacturing control processor unit 13 or in any other processor unit within a manufacturing cell, e.g. the programming/ monitoring processor unit 41, 42.

The security processor unit 21 or 22 checks incoming and outgoing communication for any irregularity and interferes when necessary by interrupting the communication link or session or connection attempt or sends out alerts to system operators or other users. Communication messages to and from the manufacturing control processor unit are filtered based on elements of the messages. The rules applied for the filtering of such messages may change based on operational modes of the manufacturing control processor unit or the security processor unit or predefined security levels applied to the communication system.

In order to protect communication over non-private communication networks between remote processor units, programming, monitoring or controlling units against eavesdropping or other direct attacks, communication messages are preferably encrypted, using asymmetric cryptography with public keys, symmetric cryptography with secret keys or hybrid cryptography with a combination of public and secret key.

In order to protect communication over non-private communication networks between remote processor units, programming, monitoring or controlling units against message modification, message insertion, or other direct attacks, communication messages are preferably integrity protected, using cryptographic checksums, asymmetric cryptography with public keys, symmetric cryptography with secret keys or hybrid cryptography with a combination of public and secret key.

In order to protect the manufacturing cell from unauthorized users, access to human machine interfaces (e.g. consoles, teach panels) as well as access to programming and/or monitoring processor units needs to be restricted. Networked communications to the manufacturing control processor unit and interaction with the manufacturing control processor unit by means of input devices that are directly connected to the robot or the robot controller are protected against messages and inputs from unintended communication partners using an authentication mechanism, such as shared secrets, public/private key pairs or digital signatures, challenge response mechanisms, one-time password or token schemes, biometrics or any combination thereof. The same authentication mechanisms can be applied to the manufacturing control processor unit when communicating with other units over the network. The manufacturing control processor unit and the other unit will both authenticate itself to each other prior to sending information for monitoring or controlling purposes. When a change in the automated manufacturing units control program, operating system, control application, security application, authentication, or authorization information is transmitted from a remote unit, e.g. a developer's computer in the office floor, such changes have preferably to be confirmed directly at the manufacturing control processor unit using any kind of input means, e.g. a console, a switch, or a teach panel, which is connected to manufacturing control processor unit or the automated manufacturing unit itself.

In addition, the effect of such networked communication can be limited dependent on the sender of a communication message which may be a human or an application or a host. Such limitations can be based on at least one role assigned to the sender or at least one group to which the sender belongs or at least one capability the sender presents or includes in the message. To further improve security, the information to evaluate authenticity and communication limitations is preferably stored in at least one different device connected to the security processor unit by at least one communication link or network.

To protect data and program integrity in permanent or volatile storage of the manufacturing cell or of the programming/ monitoring processor unit or of the security processor unit, the storage can be or is regularly checked against a predefined baseline, consisting of cryptographic hashes of the memory areas and additional parameters. Binaries of the monitoring application, data stored in permanent or volatile memory of the monitoring application are protected against modification by an unauthorized user by means of digital signature schemes to associate the data stored with a specific user.

The operating system running on the manufacturing control processor unit is preferably configured such that no applications and services are running that are not used for operation, management and maintenance of the manufacturing control processor unit and that no user accounts exist that are not used for operation, management or maintenance of the manufacturing control processor unit.

The communication activities and behaviour of the manufacturing control processor unit or the programming unit or the monitoring unit can be monitored for unauthorized activities and such unauthorized activities can be determined by comparison to a data base of predefined authorized or unauthorized activities.

Any information about any of the actions suggested above, such as authentication, integrity check, detection of unauthorized behaviour, or message filtering is preferably sent to and displayed on at least one human machine interface and/ or is stored (logged) for later analysis.

To ensure secure operation of the automated manufacturing unit, the resources (microprocessor, memory devices, etc) of the manufacturing control processor unit dedicated to serving communication can be limited such that timely execution of real-time and control tasks is possible independent of the external communication load. When direct attacks try to overload the resources of the manufacturing control processor unit, this limitation will only allow overloading a limited portion, still allowing the remaining portion of the resources and applications to run properly. Alternatively, communication addressed to the manufacturing control processor unit can be throttled in case of overload by the security processor unit, allowing the manufacturing control processor unit to run properly despite a possible communication attack.

### List of Reference Numbers

- 11, 12, 13: Manufacturing Control Processor Unit
- 21, 22: Security Processor Unit
- 41, 42, 43: Programming/ Monitoring Processor Unit
- 51: Manufacturing Unit Communication Link
- 52: Manufacturing Cell Communication Link (Intra-Cell)
- 53: Network Communication Link (Inter-Cell)
- 54: Network (Intra-Cell)
- 55: Network (Inter-Cell, Intra-Enterprise, Internet)
- 60: Automated Manufacturing Unit, Robot

## Claims

1. Manufacturing control system, comprising at least one automated manufacturing unit (60) and a manufacturing control processor unit (11), said manufacturing control processor unit (11, 12) being connected to said at least one automated manufacturing unit (60) by a manufacturing unit communication link (51), said manufacturing control processor unit (11, 12) being further connected to a communication network (55) by a network communication link (53), **characterized in, that** the manufacturing control system comprises means (21, 22) for protecting communication between said manufacturing control processor unit (11, 12) and an additional communication unit.

2. Manufacturing control system as in claim 1, further comprising at least one additional automated manufacturing unit (60) with a manufacturing control processor unit (13) being connected by a manufacturing unit communication link (51), said additional manufacturing control processor unit being connected to the communication network (55) for communicating with other manufacturing control processor units (11, 12).

3. Manufacturing control system as in claims 1 or 2, **characterized in, that** said means for protecting communication comprise at least one security processor unit (21, 22), said security processor unit being connected to the manufacturing control processor unit (11, 12, 13) and to the communication network.

4. Manufacturing control system as in claim 3, **characterized in, that** said security processor unit (22) is integrated in the manufacturing control processor unit (13).

5. Manufacturing control system as in any of the preceding claims, further comprising at least one processor unit (41, 42) for programming and/or monitoring the at least one automated manufacturing unit (60), said at least one programming/monitoring processor unit being connected to the manufacturing control process unit (11, 12, 13), wherein said means (21, 22) for protecting communication protect communication between said manufacturing control process unit and said at least one programming/monitoring processor unit.

6. Manufacturing control system as in claim 5, **characterized in, that** at least one programming/monitoring processor (42) unit is connected to the manufacturing control process unit (11, 12, 13) over the communication network (55).

7. Manufacturing control system as in claims 5 or 6, **characterized in, that** the programming/monitoring processor unit comprises at least two distributed processor units (41, 42) which are connected over the communication network (55), and that the means (21) for protecting communication protect communication between said two distributed processor units (41, 42).

8. Manufacturing control system as in any of claims 5 to 7, **characterized in, that** the programming/monitoring processor unit (41, 42) comprises a human to machine interface, and that the means (21,22) for protecting communication check authorization of a user entering commands over the human to machine interface.

9. Manufacturing control system as in any of the preceding claims, **characterized in, that** the means for protecting communication comprise means for interrupting any of said communications links (51, 52, 53).

10. Manufacturing control system as in any of the preceding claims, **characterized in, that** the means for protecting communication comprise means for sending out alerts.
